# EUROPÄISCHE PATENTSCHRIFT

(11) **EP 1 635 108 B1**
(45) Veröffentlichungstag und Bekanntmachung des Hinweises auf die Patenterteilung: **26.09.2007**
(21) Anmeldenummer: 05014657.0
(22) Anmeldetag: 06.07.2005
(51) Int. Cl.: F16P 3/14

(54) **Verfahren und Vorrichtung zum Erfassen eines Objekts**
Method and apparatus to detect an object
Procédé et dispositif de détection d'un objet

(30) Priorität: 08.09.2004 DE 102004043515
(43) Veröffentlichungstag der Anmeldung: 15.03.2006
(73) Patentinhaber: SICK AG, 79183 Waldkirch (DE)
(72) Erfinder: Haberer, Manfred, 79359 Riegel (DE); Rothenberger, Bernd, 79206 Breisach-Oberrimsingen (DE); Natzkowski, Carsten, 79108 Freiburg (DE)
(74) Vertreter: Manitz, Finsterwald & Partner GbR

(56) Entgegenhaltungen:
- EP-A- 1 061 487
- DE-A1- 4 113 992
- DE-A1- 10 049 366
- DE-A1- 19 709 799

## Beschreibung

Die vorliegende Erfindung betrifft ein Verfahren zum Erfassen eines Objekts innerhalb eines Überwachungsbereichs, bei dem zumindest zwei Sensoren jeweils mindestens einen Teil des Überwachungsbereichs überwachen. Weiterhin ist die Erfindung auf eine Vorrichtung zur Verwendung bei einem solchen Verfahren gerichtet. Ein derartiges Verfahren und eine derartige Vorrichtung sind z.B. aus DE-A-19709799 bekannt.

Verfahren dieser Art werden insbesondere in der Sicherheitstechnik verwendet. Dabei wird beispielsweise fortlaufend geprüft, ob ein innerhalb des Überwachungsbereichs erfasstes Objekt, insbesondere eine Person, in den Gefahrenbereich einer innerhalb des Überwachungsbereichs arbeitenden Maschine, beispielsweise eines Roboters, eindringt. Wird ein solches Eindringen festgestellt, kann die Maschine abgeschaltet oder eine sonstige geeignete Sicherheitsfunktion ausgelöst werden.

Bei der Verwendung von als Flächensensoren ausgebildeten Laserscannern ist dabei üblicherweise für jeden Sensor ein eigenes Schutzfeld definiert, mit dem der Bereich zwischen Sensor und Maschine auf Eindringen eines Objekts überwacht wird. Die Messdaten jedes Sensors werden jeweils separat einer Auswerteeinheit zugeführt, die beispielsweise die Maschine abschaltet, wenn aufgrund der von einem Sensor gelieferten Messdaten durch einen Vergleich mit vorgegebenen Solldaten eine Verletzung des Schutzbereichs erkannt wird. Da die Messdaten der Sensoren üblicherweise jeweils in dessen eigenem Bezugssystem ermittelt und an die Auswerteeinheit übertragen werden, müssen diese vor Durchführung des Vergleichs von der Auswerteeinheit entsprechend der Anordnung des Sensors und dem verwendeten Datenformat in das Bezugssystem der Auswerteeinheit transformiert werden.

Problematisch ist dabei, dass eine von einem Sensor gemeldete Schutzbereichsverletzung nicht notwendigerweise bedeutet, dass das erfasste Objekt auch den Gefahrenbereich der Maschine verletzt. Da der Sensor den zwischen dem Objekt und der Maschine gelegenen Bereich nicht einsehen kann, kann nicht unterschieden werden, ob das Objekt mit seinem vom Sensor abgelegenen Teil bis in den Gefahrenbereich der Maschine reicht oder nicht. Aus Sicherheitsgründen muss daher beim Erfassen eines Objekts die Maschine abgeschaltet werden, auch wenn tatsächlich gar keine Verletzung des Gefahrenbereichs der Maschine vorliegt. Die Erfassung des Objekts ist somit betreffend seine tatsächliche Form unvollständig, da auch der zwischen dem Objekt und der Maschine aus Sicht des Sensors liegende "Schatten" des Objekts bei der Objekterfassung berücksichtigt werden muss.

Weiterhin ist es nachteilig, dass aufgrund des beschriebenen Schattenwurfs des Schutzbereichs der Sensoren immer bis zum Sensor definiert sein muss, so dass eine freie Definition des Schutzbereichs innerhalb des Überwachungsraums nicht möglich ist.

Letztlich ist der Rechenzeitaufwand in der Auswerteeinheit für die erforderlichen Koordinatentransformationen relativ hoch, so dass insbesondere bei der Verwendung von mehreren Sensoren für zeitkritische Anwendung hohe Rechenleistungen erforderlich sind.

Der vorliegenden Erfindung liegt daher die Aufgabe zugrunde, ein Verfahren und eine Vorrichtung der eingangs genannten Art so auszubilden, dass eine genauere Erfassung von Objekten möglich ist.

Die das Verfahren betreffende Aufgabe wird ausgehend von einem Verfahren der eingangs genannten Art dadurch gelöst, dass jeder Sensor ein digitales Einzelabbild des gesamten Überwachungsbereichs erzeugt, wobei die Einzelabbilder aller Sensoren in einem einheitlichen Koordinatensystem erzeugt werden, dass von jedem Sensor diejenigen Koordinatenpunkte des von ihm erzeugten Einzelabbildes als "sicher" gekennzeichnet werden, die er als frei vom Objekt erkennt, dass alle anderen Koordinatenpunkte der Einzelabbilder als "unsicher" gekennzeichnet werden, dass die derart erzeugten Einzelabbilder jeweils zu einer Auswerteeinheit übertragen werden, dass die übertragenen Einzelabbilder von der Auswerteeinheit entsprechend ihrem gemeinsamen Koordinatensystem zu einem resultierenden Gesamtabbild überlagert werden, indem diejenigen Koordinatenpunkte des Gesamtabbilds als "sicher" gekennzeichnet werden, die zumindest in einem der von den Sensoren übertragenen Einzelabbilder als "sicher" gekennzeichnet sind, während alle anderen Koordinatenpunkte des Gesamtabbilds als "unsicher" gekennzeichnet werden, und dass die im Gesamtabbild als "unsicher" gekennzeichneten Koordinatenpunkte zur Bestimmung der Objektkoordinaten verwendet werden.

Die die Vorrichtung betreffende Aufgabe wird ausgehend von einer Vorrichtung der eingangs genannten Art dadurch gelöst, dass jeder Sensor ausgebildet ist zur Erzeugung eines digitalen Einzelabbildes des gesamten Überwachungsbereichs in einem für alle Sensoren einheitlichen Koordinatensystem und zur Kennzeichnung derjenigen Koordinatenpunkte der von ihm erzeugten Einzelabbilder als "sicher", die er als frei von dem Objekt erkennt, dass jeder Sensor mit einer Auswerteeinheit zur Übertragung der derart erzeugten Einzelabbilder verbunden ist, dass die Auswerteeinheit zur Überlagerung der übertragenen Einzelabbilder entsprechend ihrem gemeinsamen Koordinatensystem zu einem resultierenden Gesamtabbild ausgebildet ist, wobei diejenigen Koordinatenpunkte des Gesamtabbilds durch die Auswerteeinheit als "sicher" kennzeichenbar sind, die zumindest in einem der von den Sensoren übertragenen Einzelabbilder als "sicher" gekennzeichnet sind, während alle anderen Koordinatenpunkte des Gesamtabbilds als "unsicher" kennzeichenbar sind, und dass die Auswerteeinheit zur Bestimmung der Objektkoordinaten aus den im Gesamtabbild als "unsicher" gekennzeichneten Koordinatenpunkten ausgebildet ist.

Erfindungsgemäß kann somit bei der Erfassung eines Objekts auch der "Schattenbereich" des Objekts zuverlässig als solcher erkannt und damit als "sicher" eingestuft werden, solange wenigstens ein Sensor diesen Schattenbereich einsehen kann. Nur der tatsächlich vom Objekt eingenommene Raum des Überwachungsbereichs wird demgemäß als "unsicher" eingestuft, so dass eine optimale und insbesondere minimierte Erfassung des Objekts innerhalb des Überwachungsbereichs gewährleistet ist.

Ein weiterer Vorteil der Erfindung liegt darin, dass die Erzeugung der Einzelabbilder für alle Sensoren in einem einheitlichen Koordinatensystem erfolgt, indem entweder alle Sensoren von vornherein in demselben Koordinatensystem arbeiten oder die erforderliche Transformation in das einheitlichen Koordinatensystem von jedem Sensor selbst durchgeführt wird. Dadurch kann die Belastung der Auswerteeinheit deutlich verringert werden, so dass die resultierende Prozessgeschwindigkeit erhöht werden kann. Auch die Kennzeichnung als sicherer bzw. unsicherer Bereich bereits auf Ebene der Sensoren bewirkt eine entsprechende Entlastung der Auswerteeinheit.

Grundsätzlich ist es möglich, dass nur eine explizite Kennzeichnung der sicheren Koordinatenpunkte erfolgt, während die übrigen Koordinatenpunkte nicht explizit, sondern nur implizit durch ihre "Nichtkennzeichnung" als unsicher gekennzeichnet werden.

Nach einer bevorzugten Ausführungsform der Erfindung wird das resultierende Gesamtabbild mit einem durch die Auswerteeinheit festgelegten, sich insbesondere dynamisch verändernden Gefahrenbereich überlagert und eine sicherheitsrelevante Funktion ausgelöst, wenn innerhalb des Gefahrenbereichs mindestens eine vorgegebene Anzahl von als unsicher gekennzeichneten Koordinatenpunkten ermittelt wird. Nach dieser Ausführungsform ist somit eine Auswertung der Objekterkennung hinsichtlich eines vorgegebenen Gefahrenbereichs möglich, wie er beispielsweise in der Sicherheitstechnik bei gefährlichen Maschinen definiert wird. Je nach Anwendungsfall und insbesondere nach verwendeter Auflösung kann dabei die sicherheitsrelevante Funktion bereits bei Ermitteln eines einzigen unsicheren Koordinatenpunktes oder erst bei mehreren solcher Punkte innerhalb des Gefahrenbereichs ausgelöst werden.

Der Gefahrenbereich kann beispielsweise der Wirkungsbereich einer Maschine, insbesondere eines Roboters sein, während das zu erfassende Objekt durch eine Person gebildet wird, die sich innerhalb des Überwachungsbereichs befindet und vor einem gefährlichen Kontakt mit dem Roboter geschützt werden muss. Mit der Erfindung wird eine sicherheitsrelevante Funktion, z.B. ein Abschalten der Maschine nur ausgelöst, wenn das erfasste Objekt tatsächlich in den Gefahrenbereich der Maschine eindringt. Wird ein Objekt von einem Sensor innerhalb des Überwachungsbereichs so erfasst, dass der vom Sensor nicht einsehbare "Schatten" des Objekts zwischen dem Objekt und der Maschine zu liegen kommt, wird erfindungsgemäß die sicherheitsrelevante Funktion nicht ausgelöst, solange wenigsten einer der Sensoren diesen Schattenbereich einsehen kann und damit die Koordinatenpunkte dieses Bereichs als "sicher" einstuft.

Bevorzugt besitzen die Einzelabbilder der verschiedenen Sensoren jeweils dieselbe Auflösung (Diskretisierung). Dadurch kann die Überlagerung der Bilder in der Auswerteeinheit beschleunigt werden, da eine weitere Umrechnung innerhalb der Auswerteeinheit nicht erforderlich ist. Der Rechenaufwand bei der Verarbeitung der Bilder kann damit verringert werden, so dass die Größe des erforderlichen Gefahrenbereichs minimiert werden kann, da eine kürzere Reaktionszeit beim Auslösen der sicherheitsrelevanten Funktion erreicht wird. Letztlich kann dadurch eine Vergrößerung des Wirkungskreises der Maschine erzielt werden.

Vorteilhaft wird in einer Initialisierungsphase für jeden Sensor der gemeinsame Überwachungsbereich definiert sowie die eigene Position bezogen auf den Überwachungsbereich festgelegt. Durch diese Initialisierungsphase wird ein einheitliches Bezugssystem aller Sensoren sowie ein einheitliches Format der Sensordaten, die an die Auswerteeinheit geschickt werden sollen, garantiert. Insbesondere ist es wichtig, die jeweilige Position jedes Sensors bezogen auf den Überwachungsbereich festzulegen, da die Sensordaten nicht mehr in einem auf den jeweiligen Sensor zentrierten Koordinatensystem an die Auswerteeinheit übertragen werden, sondern die an die Auswerteeinheit übertragenen Daten für alle Sensoren in einem einheitlichen Koordinatensystem übertragen werden sollen.

Nach einer weiteren bevorzugten Ausführungsform der Erfindung werden die jedem Koordinatenpunkt der Einzelabbilder zugeordneten Werte "sicher" und "unsicher" von jedem Sensor binär codiert und die entsprechend codierten Sensordaten an die Auswerteeinheit übertragen. Durch die Binärcodierung wird die von den Sensoren zu der Auswerteeinheit zu übertragende Datenmenge minimiert.

Bevorzugt werden die Einzelabbilder von den Sensoren in einem kartesischen Koordinatensystem erzeugt und an die Auswerteeinheit ü bertragen, wobei insbesondere die Auflösung (Diskretisierung) in x- und y-Richtung gleich ist. Ein kartesisches Koordinatensystem hat gegenüber einem Polarkoordinatensystem den Vorteil, dass kein Punkt im Raum besonders bevorzugt ist. Insbesondere ist bei Verwendung verschiedener Sensoren mit verschiedenen Standorten daher ein direkter Vergleich aller Koordinatenpunkte der unterschiedlichen Einzelabbilder möglich.

Nach einer weiteren bevorzugten Ausführungsform kann die Erfindung bei einer dreidimensionale Bilderfassung angewendet werden. Eine dreidimensionale Bilderfassung ist beispielsweise vorteilhaft, wenn die Maschine in unterschiedlichen Höhen arbeitet. Beispielsweise kann sich bei einem Roboterarm, der aktuell in einer Höhe von über 2 m arbeitet, eine Person ohne Gefahr im Bereich unterhalb des Roboterarms bewegen. Erst wenn der Roboterarm in Richtung der Person abgesenkt wird, muss eine entsprechende sicherheitsrelevante Funktion ausgelöst werden. Dafür ist jedoch die Verwendung von Sensoren mit dreidimensionaler Auflösung sowie eine entsprechende dreidimensionale Erzeugung und Auswertung der Einzel- und Gesamtabbilder erforderlich. Gleiches gilt bei einer entsprechenden variablen dreidimensionalen Ausgestaltung des erfassten Objekts.

Nach einer weiteren bevorzugten Ausführungsform der Erfindung erfolgt insbesondere durch die Auswerteeinheit eine Klassifizierung der in dem Überwachungsbereich erfassten Objekte in zur Maschine gehörende und nicht zur Maschine gehörende Objekte. Dies ist dann erforderlich, wenn die Maschine so angeordnet ist, dass sie ebenfalls von den Sensoren erfasst wird. Da die Maschine per Definition immer innerhalb des Gefahrenbereichs angeordnet ist, würde ohne die angegebene Klassifizierung ein Selbstauslösen der sicherheitsrelevanten Funktionen durch die Maschine erfolgen. Beispielsweise können unmittelbar von der Maschinensteuerung erhaltene Maschinenpositionsdaten mit den von dem Sensor erfassten Positionsdaten verglichen werden, so dass auf diese Weise die angegebene Klassifizierung erreicht werden kann. Die als zur Maschine gehörenden erfassten "Objektdaten" können dann bei der Überprüfung des Gefahrenbereichs unberücksichtigt bleiben. Grundsätzlich ist zur Klassifizierung beispielsweise auch eine Verwendung eines Infrarotsensors möglich, welcher nur auf die Wärmestrahlung von Personen reagiert.

Eine Klassifizierung erübrigt sich, wenn die Maschine so angeordnet ist, dass sie von dem Sensor zumindest innerhalb des Überwachungsbereichs nicht erfasst werden kann. Dies kann beispielsweise durch Verwendung eines Flächensensors erreicht werden, der so angeordnet ist, dass der Arbeitsbereich der Maschine außerhalb des Abtastbereichs des Flächensensors liegt. Natürlich muss der Flächensensor dabei weiterhin so angeordnet sein, dass in den Überwachungsbereich eindringende Objekte zuverlässig erfasst werden.

Nach einer weiteren bevorzugten Ausführungsform ist als eine der sicherheitsrelevanten Funktionen das Verlangsamen und/ oder das Anhalten der Maschine definiert. Grundsätzlich wird eine maximale Sicherheit erreicht, wenn die Maschine beim Eindringen eines Objekts in den Gefahrenbereich möglichst schnell zum Anhalten gebracht wird. In manchen Fällen kann jedoch auch ein Verlangsamen der Bewegungsgeschwindigkeit der Maschine ausreichend sein. Liegen der Auswerteeinheit Informationen zur Bewegung von Objekt und/oder Maschine vor, so kann entweder eine Verringerung der Bewegungsgeschwindigkeit oder das komplette Anhalten der Maschine gewählt werden. Im Vergleich zu einer ausschließlich auf Anhalten programmierten Maschine hat dies den Vorteil, dass ein Maschinenstopp wirklich nur in notwendigen Fällen ausgelöst wird, während in weniger dringenden Fällen ein Verlangsamen der Maschinenbewegung ausreicht. Auf diese Weise ist gewährleistet, dass der Fertigungsprozess nicht unnötig behindert wird.

Bevorzugt kann als eine der sicherheitsrelevanten Funktionen das Ausweichen der Maschine gegenüber dem Objekt definiert sein. Ein Ausweichen der Maschine kann oftmals sicherer als das Verlangsamen oder Anhalten der Maschine sein, da aufgrund der Trägheit der Maschine ein Anhalten unter Umständen weniger schnell zu erreichen ist als eine Ausweichbewegung. Hierzu ist es jedoch notwendig, dass Angaben über die Bewegungsrichtung und Bewegungsgeschwindigkeit des Objekts bekannt sind, damit die Ausweichbewegung in die richtige Richtung erfolgt. Darüber hinaus ist dadurch auch gewährleistet, dass der Fertigungsprozess nicht unnötig unterbrochen wird.

In einer weiteren vorteilhaften Ausführungsform der Erfindung ist als eine der sicherheitsrelevanten Funktionen das Auslösen eines akustischen und/oder optischen Warnsignals definiert. Dies hat den besonderen Vorteil, dass der Arbeitsablauf der Maschine nicht unterbrochen wird und gleichzeitig eine wirksame Warnung gegenüber eindringenden Objekten, insbesondere Personen, ausgegeben wird. Besonders vorteilhaft ist eine Kombination des Warnsignals mit einer oder mehreren der oben genannten sicherheitsrelevanten Funktionen. Insbesondere können dabei Gefahrenbereiche unterschiedlichen Grades definiert sein. Dringt ein Objekt in einen Bereich ersten Grades, also relativ niedriger Gefährdung ein, so wird ein akustisches oder optisches Warnsignal ausgelöst, welches noch nicht den Arbeitsfluss der Maschine unterbricht. Dringt das Objekt jedoch in den Gefahrenbereich zweiten Grades ein, so weicht die Maschine entweder dem Objekt aus oder wird in ihrer Bewegung verlangsamt und evtl. vollständig angehalten.

Die Erfindung wird im Folgenden anhand eines Ausführungsbeispiels unter Bezugnahme auf die Zeichnungen näher erläutert; in diesen zeigen:
- Fig. 1: eine schematische Darstellung einer Überwachungsvorrichtung nach dem Stand der Technik,
- Fig. 2: eine schematische Darstellung einer erfindungsgemäß ausgebildeten Überwachungsvorrichtung und
- Fig. 3 a)-d): eine schematische Darstellung des prinzipiellen Ablaufs der Sensordatenüberlagerung gemäß der Erfindung.

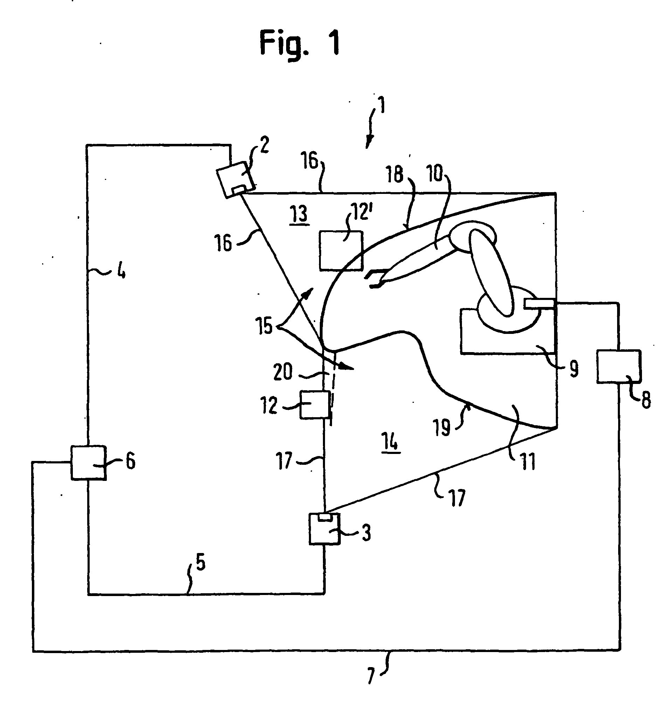

Fig. 1 zeigt eine Überwachungsvorrichtung 1 nach dem Stand der Technik, mit als Laserscanner ausgebildeten Flächensensoren 2, 3, die jeweils über Leitungen 4, 5 mit einer Auswerteeinheit 6 verbunden sind. Die Auswerteeinheit 6 ist über eine weitere Leitung 7 mit einer Maschinensteuerung 8 einer als Roboter ausgebildeten Maschine 9 verbunden, die einen beweglichen Roboterarm 10 umfasst. Über die Leitung 7 kann von der Auswerteeinheit 6 eine sicherheitsrelevante Funktion der Maschinensteuerung 8 ausgelöst, beispielsweise die Maschine 9 abgeschaltet werden.

Durch die Bewegung des Roboterarms 10 wird ein Gefahrenbereich 11 definiert, der von den Sensoren 2, 3 überwacht wird. In den Gefahrenbereich 11 eindringende Objekte können durch die Bewegungen des Roboterarms 10 gefährdet werden, so dass ein solches Eindringen beispielsweise zu einem Abschalten der Maschine 9 durch die Auswerteeinheit 6 führen muss. In Fig. 1 ist sowohl ein Objekt 12, welches den Gefahrenbereich 11 nicht verletzt, als auch ein Objekt 12', welches den Gefahrenbereich 11 verletzt, abgebildet.

Gemäß dem Stand der Technik nach Fig. 1 ist für jeden Sensor 2, 3 ein Schutzbereich 13, 14 definiert, die zusammen einen Überwachungsbereich 15 der Überwachungsvorrichtung 1 bilden. Die Schutzbereiche 13, 14 werden dabei von Abtaststrahlen 16, 17 überstrichen, die von den Sensoren 2, 3 ausgesandt werden, wobei in Fig. 1 jeweils nur die beiden die Schutzbereiche 13, 14 begrenzenden Abtaststrahlen 16 und 17 (Randstrahlen) eingezeichnet sind. Die Schutzbereiche 13, 14 werden außer durch die Randstrahlen 16, 17 durch die im Abtastbereich der Sensoren 2, 3 liegenden Kanten 18, 19 des Gefahrenbereichs 11 begrenzt.

Bei jedem Überstreichen der Schutzbereiche 13, 14 erfolgt durch die Sensoren 2, 3 für jeden Abtaststrahl 16, 17 eine Abstandsmessung, wobei der für jeden Abtaststrahl gemessene Abstand an die Auswerteeinheit 6 übertragen wird. In der Auswerteeinheit 6 sind die Abstandswerte im unkritischen Fall, d.h. im Fall, dass kein Objekt 12 innerhalb eines der Schutzbereiche 13, 14 angeordnet ist, als Sollwerte gespeichert. Die Auswerteeinheit 6 vergleicht die von den Sensoren 2, 3 gelieferten Messwerte mit den jeweiligen gespeicherten Sollwerten und löst über die Maschinensteuerung 8 eine sicherheitsrelevante Funktion, beispielsweise die Abschaltung der Maschine 9 aus, wenn einer der gemessenen Werte kleiner ist als der entsprechende Sollwert, wie es beim Eindringen des Objekts 12' in den Schutzbereich 13 der Fall ist.

Wie aus Fig. 1 zu erkennen ist, löst jedoch auch das Objekt 12 ein entsprechendes sicherheitsrelevantes Signal aus, da durch das Objekt 12 der Schutzbereich 14 des Sensors 3 verletzt wird, obwohl das Objekt 12 nicht in den Gefahrenbereich 11 eindringt. Da der innerhalb des Schutzbereichs 14 zwischen dem Objekt 12 und dem Gefahrenbereich 11 liegende Bereich 20 eine Abschattung bildet, kann er von dem Sensor 3 nicht eingesehen werden, so dass die Maschine 9 abgeschaltet werden muss, um die erforderliche Sicherheit einzuhalten.

Bei dem Verfahren nach dem Stand der Technik würde somit bereits auf grund des Objekts 12 die Maschine 9 abgeschaltet, obwohl keine Verletzung des Gefahrenbereichs 11 vorliegt.

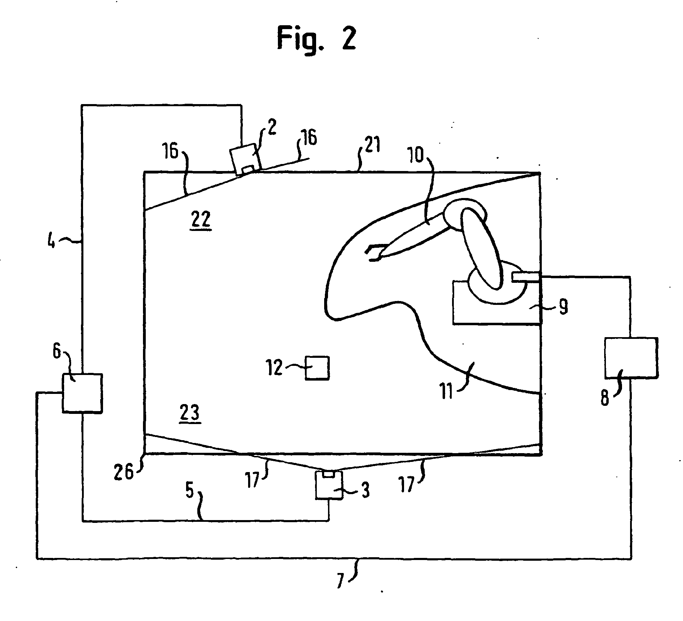

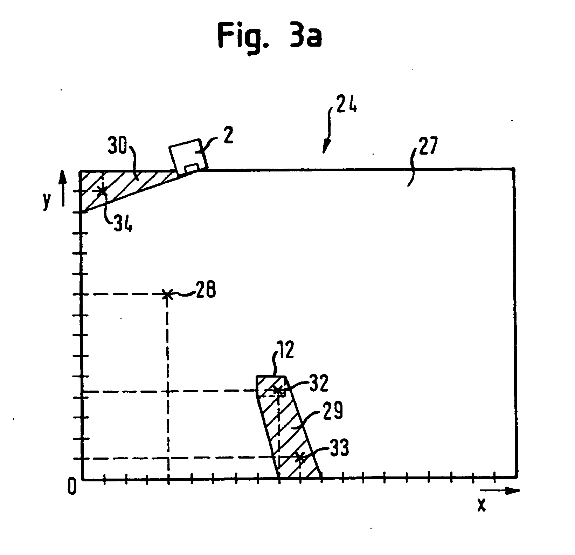

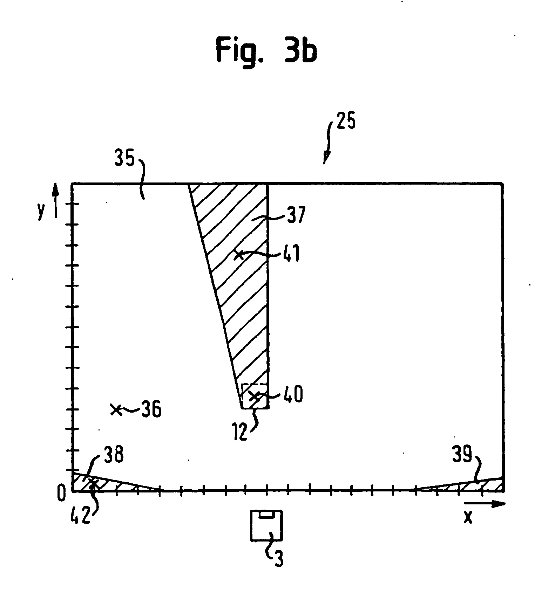

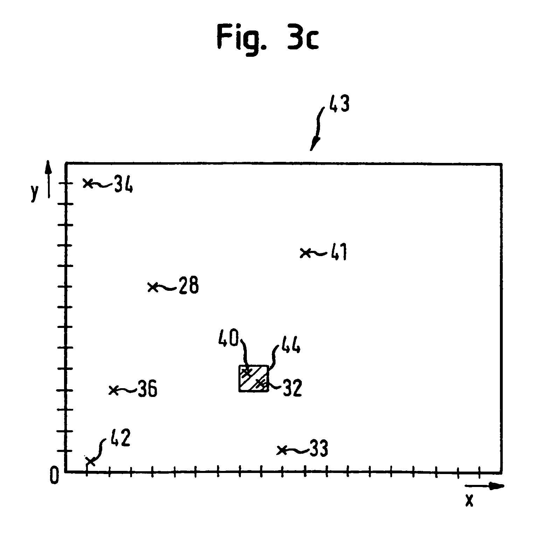

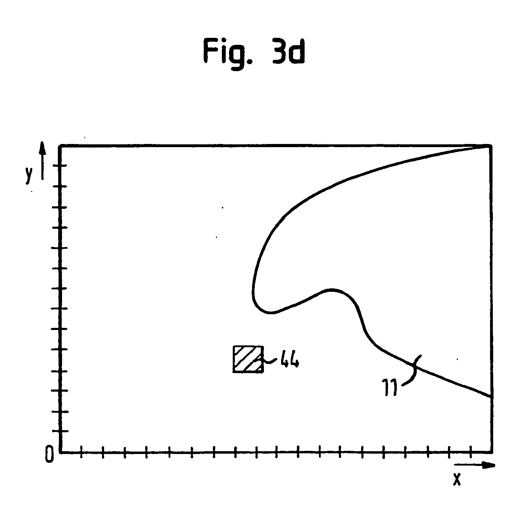

Nachfolgend wird die Erfindung unter Bezugnahme auf die Fig. 2 und 3 näher beschrieben. Dabei werden für Elemente, welche bereits in Fig. 1 dargestellt sind, die gleichen Bezugszeichen wie in Fig. 1 verwendet.

In Fig. 2 befindet sich das Objekt 12 in einem Überwachungsbereich 21, der von den Sensoren 2, 3 überwacht wird. Im Gegensatz zu Fig. 1 sind die Abtastwinkel der Sensoren 2, 3 dabei nicht auf den Gefahrenbereich 11 beschränkt, sondern die Abtaststrahlen 16, 17 der Sensoren 2, 3 überstreichen jeweils wesentlich größere, sich überlappende Abtastbereiche 22, 23, die den Gefahrenbereich 11 umfassen.

In einer Initialisierungsphase wird jedem Sensor 2, 3 von dem Auswerteeinheit 6 der gemeinsame Überwachungsbereich 21 sowie seine eigene Position und Ausrichtung im Raum übermittelt. Aufgrund dieser Daten sowie der Kenntnis über seinen eigenen Abtastwinkel und seine Abtastwinkelauflösung ist jeder Sensor 2, 3 in der Lage, für jeden Koordinatenpunkt im Überwachungsbereich 21 eine Transformation zwischen den ihm eigenen Messkoordinaten und einem einheitlichen, übergreifenden Koordinatensystem für alle Sensoren 2, 3 durchzuführen.

Während die in den Figuren dargestellten Flächensensoren 2, 3 ihre Messwerte (Abstandswerte) üblicherweise in Polarkoordinaten ermitteln, kann als einheitliches Koordinatensystem ein kartesische Koordinatensystem verwendet werden, dessen Nullpunkt beispielsweise in einer Ecke 26 des Überwachungsbereichs liegt. Jeder Sensor 2, 3 ist somit in der Lage, die in dem ihm eigenen Koordinatensystem ermittelten Messdaten unmittelbar in das allen Sensoren 2, 3 gemeinsame Koordinatensystem zu transformieren.

Jeder der Sensoren 2, 3 erzeugt mit jeder Abtastung, d.h. mit jedem Überstreichen seines Abtastbereichs 22, 23, ein digitales Einzelabbild 24, 25 des gesamten Oberwachungsbereichs 21, wie es in den Fig. 3a) und 3b) dargestellt ist. Dazu werden alle von dem jeweiligen Sensor 2, 3 während einer Abtastung als frei erkannten Koordinatenpunkte des gemeinsamen Koordinatensystems als "sicher" gekennzeichnet, während alle restlichen Koordinatenpunkte als "unsicher" gekennzeichnet werden. Bei diesen als "unsicher" gekennzeichneten Koordinatenpunkten handelt es sich somit sowohl um Koordinatenpunkte des Überwachungsbereichs 21, an denen tatsächlich ein Objekt 12 vorhanden ist, als auch um Koordinatenpunkte, die von dem jeweiligen Sensor 2, 3 nicht einsehbar sind und sich somit für den jeweiligen Sensor 2, 3 im "Schatten" des Objekts 12 befinden.

In Fig. 3a) ist das entsprechende vom Sensor 2 erzeugte Einzelabbild 24 dargestellt. Dabei ist zur Verdeutlichung der Sensor 2 ebenfalls in Fig. 3a) abgebildet.

Das Einzelabbild 24 umfasst einen weiß dargestellten "sicheren" Bereich 27, der die vom Sensor 2 als "sicher" gekennzeichneten Koordinatenpunkte enthält. Stellvertretend für alle "sicheren" Koordinatenpunkte ist in Fig. 3 a) ein Koordinatenpunkt 28 hervorgehoben.

Weiterhin umfasst das Einzelabbild 24 zwei schraffiert dargestellte Bereiche 29, 30, die jeweils die vom Sensor 2 als "unsicher" gekennzeichneten Koordinatenpunkte umfassen. Dabei wird aus Fig. 3a) ersichtlich, dass solche unsicheren Koordinatenpunkte entweder die Position eines im Überwachungsbereich 21 erfassten Objekts 12 oder Bereiche kennzeichnen, die von dem Sensor 2 nicht einsehbar sind. So ist stellvertretend in Fig. 3a) ein unsicherer Koordinatenpunkt 32 eingezeichnet, der mit der Position des gestrichelt angedeuteten Objekts 12 zusammenfällt, während ein weiterer Koordinatenpunkt 33 als unsicher gekennzeichnet ist, da er für den Sensor 2 im "Schatten" des Objekts 12 liegt und daher nicht einsehbar ist. Der Bereicht 30 ist von dem Sensor 2 hingegen nicht einsehbar, da er außerhalb dessen Abtastbereichs 22 liegt, so dass auch die in dem Bereich 30 liegenden Koordinatenpunkte 34 als unsicher gekennzeichnet sind.

In entsprechender Weise ist in Fig. 3b) ein von dem Sensor 3 erzeugtes Einzelabbild 25 dargestellt, welches einen weiß dargestellten "sicheren" Bereich 35 mit als sicher gekennzeichneten Koordinatenpunkten 36 sowie drei schraffiert dargestellte unsichere Bereiche 37, 38, 39 mit als unsicher gekennzeichneten Koordinatenpunkten 40, 41, 42 umfasst.

Die auf diese Weise gekennzeichneten Einzelabbilder 24, 25 werden von den Sensoren 2, 3 zu der Auswerteeinheit 6 übertragen, die die Einzelabbilder 24, 25 entsprechend dem gemeinsamen Koordinatensystem zu einem resultierende Gesamtabbild 43 überlagert, das in Fig. 3c) dargestellt ist. Dabei werden diejenigen Koordinatenpunkte des Gesamtabbilds 43 als sicher gekennzeichnet, die zumindest in einem der von den Sensoren 2, 3 übertragenen Einzelabbildern 24, 25 als sicher gekennzeichnet sind, während alle anderen Koordinatenpunkte des Gesamtabbilds 43 als unsicher gekennzeichnet werden. Gemäß Fig. 3c) wird durch die als unsicher gekennzeichneten Koordinatenpunkte das Objekt 12 ohne "Schatten" in seiner korrekten Form in einem schraffiert dargestellten unsicheren Bereich 44 erfasst.

In einem nächsten Schritt wird das erzeugte Gesamtabbild 43 von der Auswerteeinheit 6 mit dem Gefahrenbereich 11 überlagert (siehe Fig. 3d)) und überprüft, ob innerhalb des Gefahrenbereichs 11 eine vorgegebene Mindestanzahl von als unsicher gekennzeichneten Koordinatenpunkten enthalten ist, d.h. ein Überschneidung des unsicheren Bereichs 44 mit dem Gefahrenbereich 11 vorliegt. Der Gefahrenbereich 11 liegt dabei innerhalb der Auswerteeinheit 6 vorteilhaft ebenfalls in dem gleichen Koordinatensystem vor wie die Einzelabbilder 24, 25 und das Gesamtabbild 43, um auf diese Weise eine einfach Überlagerung mit dem Gesamtabbild 43 zu ermöglichen. Nur wenn eine vorgegebene Mindestüberschneidung von unsicheren Koordinatenpunkten des Gesamtabbilds 43 und Gefahrenbereich 11 vorliegt, wird von der Auswerteeinheit 6 eine entsprechende sicherheitsrelevante Funktion, beispielsweise ein Abschalten der Maschine 9 ausgelöst.

Wie aus Fig. 3d) ersichtlich ist, besteht in vorliegendem Fall keine Überlappung zwischen dem Bereich 44 und dem Gefahrenbereich 11, so dass erfindungsgemäß erkannt wird, dass das Objekt 12 den Gefahrenbereich nicht verletzt. Im Gegensatz zu dem unter Bezugnahme auf Fig. 1 beschriebenen Stand der Technik wird mit der Erfindung somit eine unnötige Betriebsunterbrechung der Maschine 9 verhindert.

Insbesondere die Darstellung nach Fig. 3d) kann an einer Anzeigeeinheit zur Überwachung durch eine Überwachungsperson angezeigt werden. Dabei werden vorteilhaft die sicheren und die unsicheren Koordinatenpunkte bzw. durch diese an der Anzeigeeinheit definierte Bereiche in unterschiedlichen Farben dargestellt. Auch der Gefahrenbereich kann davon abgehoben farbig markiert werden, so dass die Überwachungsperson unmittelbar erkennen kann, wenn eine Verletzung des Gefahrenbereichs vorliegt oder beispielsweise unmittelbar bevorsteht.

### Bezugszeichenliste

- 1: Überwachungsvorrichtung
- 2: Sensor
- 3: Sensor
- 4: Leitung
- 5: Leitung
- 6: Auswerteeinheit
- 7: Leitung
- 8: Maschinensteuerung
- 9: Maschine
- 10: Roboterarm
- 11: Gefahrenbereich
- 12, 12': Objekte
- 13: Schutzbereich
- 14: Schutzbereich
- 15: Überwachungsbereich
- 16: Abtaststrahlen
- 17: Abtaststrahlen
- 18: Kante des Gefahrenbereichs
- 19: Kante des Gefahrenbereichs
- 20: Abschattungsbereich
- 21: Überwachungsbereich
- 22: Abtastbereich
- 23: Abtastbereich
- 24: Einzelabbild
- 25: Einzelabbild
- 27: sicherer Bereich
- 28: Koordinatenpunkt
- 29: unsicherer Bereich
- 30: unsicherer Bereich
- 32: Koordinatenpunkt
- 33: Koordinatenpunkt
- 34: Koordinatenpunkt
- 35: sicherer Bereich
- 36: Koordinatenpunkt
- 37: unsicherer Bereich
- 38: unsicherer Bereich
- 39: unsicherer Bereich
- 40: Koordinatenpunkt
- 41: Koordinatenpunkt
- 42: Koordinatenpunkt
- 43: Gesamtabbild
- 44: unsicherer Bereich

## Patentansprüche

1. Verfahren zum Erfassen eines Objekts (12) innerhalb eines Überwachungsbereichs (21), bei dem zumindest zwei Sensoren (2,3) jeweils mindestens einen Teil des Überwachungsbereichs (21) überwachen,
**dadurch gekennzeichnet,**
**dass** jeder Sensor (2, 3) ein digitales Einzelabbild (24, 25) des gesamten Überwachungsbereichs (21) erzeugt, wobei die Einzelabbilder (24, 25) aller Sensoren (2, 3) in einem einheitlichen Koordinatensystem erzeugt werden,
**dass** von jedem Sensor (2, 3) diejenigen Koordinatenpunkte (28, 36) des von ihm erzeugten Einzelabbildes (24, 25) als "sicher" gekennzeichnet werden, die er als frei von dem Objekt (12) erkennt,
**dass** alle anderen Koordinatenpunkte (32, 33, 34, 40, 41, 42) der Einzelabbilder (24, 25) als "unsicher" gekennzeichnet werden,
**dass** die derart erzeugten Einzelabbilder (24, 25) jeweils zu einer Auswerteeinheit (6) übertragen werden,
**dass** die übertragenen Einzelabbilder (24, 25) von der Auswerteeinheit (6) entsprechend ihrem gemeinsamen Koordinatensystem zu einem resultierenden Gesamtabbild (43) überlagert werden, indem diejenigen Koordinatenpunkte (28, 36) des Gesamtabbilds (43) als "sicher" gekennzeichnet werden, die zumindest in einem der von den Sensoren (2, 3) übertragenen Einzelabbilder (24, 25) als "sicher" gekennzeichnet sind, während alle anderen Koordinatenpunkte des Gesamtabbilds (43) als "unsicher" gekennzeichnet werden, und
**dass** die im Gesamtabbild (43) als "unsicher" gekennzeichneten Koordinatenpunkte zur Bestimmung der Objektkoordinaten verwendet werden.

2. Verfahren nach Anspruch 1,
**dadurch gekennzeichnet,**
**dass** das resultierende Gesamtabbild (43) mit einem durch die Auswerteeinheit (6) festgelegten, sich insbesondere dynamisch verändernden Gefahrenbereich (11) überlagert wird und dass eine sicherheitsrelevante Funktion ausgelöst wird, wenn innerhalb des Gefahrenbereichs (11) mindestens eine vorgegebene Anzahl von als "unsicher" gekennzeichneten Koordinatenpunkten (32, 40) ermittelt wird.

3. Verfahren nach Anspruch 1 oder 2,
**dadurch gekennzeichnet,**
**dass** die Einzelabbilder (24, 25) der verschiedenen Sensoren (2, 3) jeweils dieselbe Diskretisierung besitzen.

4. Verfahren nach einem der vorhergehenden Ansprüche,
**dadurch gekennzeichnet,**
**dass** in einer Initialisierungsphase für jeden Sensor (2, 3) der gemeinsame Überwachungsbereich (21) definiert sowie die eigene Position bezogen auf den Überwachungsbereich (21) festgelegt wird.

5. Verfahren nach einem der vorhergehenden Ansprüche,
**dadurch gekennzeichnet,**
**dass** die jedem Koordinatenpunkt der Einzelabbilder (24, 25) zugeordneten Werte "sicher" und "unsicher" von jedem Sensor (2, 3) binär codiert und die entsprechend codierten Sensordaten an die Auswerteeinheit (6) übertragen werden.

6. Verfahren nach einem der vorhergehenden Ansprüche,
**dadurch gekennzeichnet,**
**dass** die Einzelabbilder (24, 25) von den Sensoren (2, 3) in einem kartesischen Koordinatensystem erzeugt und an die Auswerteeinheit (6) übertragen werden und dass insbesondere die Diskretisierung in x - und y - Richtung gleich ist.

7. Verfahren nach einem der vorhergehenden Ansprüche,
**dadurch gekennzeichnet,**
**dass** die Bilderfassung und/oder die Erzeugung und/oder die Auswertung der Einzelabbilder (24, 25) und/oder des Gesamtabbildes (43) dreidimensional erfolgt.

8. Verfahren nach einem der vorherigen Ansprüche,
**dadurch gekennzeichnet,**
**dass** eine Klassifizierung der in dem Überwachungsbereich (21) erfassten Objekte (10, 12) in zur Maschine (9) gehörende Objekte (10) und nicht zur Maschine (9) gehörende Objekte (12) erfolgt und dass die sicherheitsrelevante Funktion nicht durch die Erfassung von zu der Maschine (9) gehörenden Objekten (10) ausgelöst wird.

9. Verfahren nach einem der vorherigen Ansprüche,
**dadurch gekennzeichnet,**
**dass** das Auslösen der sicherheitsrelevanten Funktion das Verlangsamen und/oder Anhalten der Maschine (9) umfasst und/oder
**dass** das Auslösen der sicherheitsrelevanten Funktion das Ausweichen der Maschine (9) gegenüber dem Objekt (12) umfasst und/oder dass das Auslösen der sicherheitsrelevanten Funktion das Aussenden eines optischen und/oder akustischen Warnsignals umfasst.

10. Vorrichtung zur Erfassung eines Objekts (12) innerhalb eines Überwachungsbereichs (21), mit zumindest zwei Sensoren (2, 3) zur Überwachung jeweils mindestens eines Teils des Überwachungsbereichs (21), insbesondere zur Durchführung eines Verfahrens nach einem der vorhergehenden Ansprüche,
**dadurch gekennzeichnet,**
**dass** jeder Sensor (2, 3) ausgebildet ist
- zur Erzeugung eines digitalen Einzelabbildes (24, 25) des gesamten Überwachungsbereichs (21) in einem für alle Sensoren (2, 3) einheitlichen Koordinatensystem
- und zur Kennzeichnung derjenigen Koordinatenpunkte (28, 36) der von ihm erzeugten Einzelabbilder (24, 25) als "sicher", die er als frei von dem Objekt (12) erkennt,
**dass** jeder Sensor (2, 3) mit einer Auswerteeinheit (6) zur Übertragung der derart erzeugten Einzelabbilder (24, 25) verbunden ist, dass die Auswerteeinheit (6) zur Überlagerung der übertragenen Einzelabbilder (24, 25) entsprechend ihrem gemeinsamen Koordinatensystem zu einem resultierenden Gesamtabbild (43) ausgebildet ist, wobei diejenigen Koordinatenpunkte (28, 36) des Gesamtabbilds (43) durch die Auswerteeinheit (6) als "sicher" kennzeichenbar sind, die zumindest in einem der von den Sensoren (2, 3) übertragenen Einzelabbilder (24, 25) als "sicher" gekennzeichnet sind, während alle anderen Koordinatenpunkte des Gesamtabbilds (43) durch die Auswerteeinheit (6) als "unsicher" kennzeichenbar sind, und dass die Auswerteeinheit (6) zur Bestimmung der Objektkoordinaten aus den im Gesamtabbild (43) als "unsicher" gekennzeichneten Koordinatenpunkten ausgebildet ist.

## Claims

1. A method for detecting an object (12) inside a monitored zone (21), in which at least two sensors (2, 3) respectively monitor at least a part of the monitored zone (21),
**characterized in that**
each sensor (2, 3) generates a single digital image (24, 25) of the total monitored zone (21), with the single images (24, 25) of all sensors (2, 3) being generated in a uniform coordinate system;
**in that** those coordinate points (28, 36) of the single image (24, 25) generated by each sensor (2, 3) which the sensor recognizes as free of the object (12) are flagged as "safe" by each sensor;
**in that** all other coordinate points (32, 33, 34, 40, 41, 42) of the single images (24, 25) are flagged as "unsafe";
**in that** the single images (24, 25) generated in this manner are each transmitted to an evaluation unit (6);
**in that** the transmitted single images (24, 25) are superimposed by the evaluation unit (6) to form a resulting total image (43) in accordance with their common coordinate system **in that** those coordinate points (28, 36) of the total image (43) are flagged as "safe" which are flagged as "safe" in at least one of the single images (24, 25) transmitted by the sensors (2, 3), whereas all other coordinate points of the total image (43) are flagged as "unsafe"; and **in that** the coordinate points flagged as "unsafe" in the total image (43) are used for the determination of the object coordinates.

2. A method in accordance with claim 1, **characterized in that** the resulting total image (43) is superimposed with a danger zone (14) fixed by the evaluation unit (6) and in particular changing dynamically; and **in that** a safety-relevant function is triggered when at least a pre-determined number of coordinate points (32, 40) flagged as "unsafe" is determined inside the danger zone (11).

3. A method in accordance with claim 1 or claim 2, **characterized in that** the single images (24, 25) of the different sensors (2, 3) each have the same discretization.

4. A method in accordance with any one of the preceding claims, **characterized in that** the common monitored zone (21) is defined for each sensor (2, 3) in an initialization phase and its own position is fixed with respect to the monitored zone (21).

5. A method in accordance with any one of the preceding claims, **characterized in that** the values "safe" and "unsafe" associated with each coordinate point of the single images (24, 25) undergo binary encoding by each sensor (2, 3) and the correspondingly encoded sensor data are transmitted to the evaluation unit (6).

6. A method in accordance with any one of the preceding claims, **characterized in that** the individual images (24, 25) are generated in a Cartesian coordinate system by the sensors (2, 3) and are transmitted to the evaluation unit (6); and **in that** the discretization is in particular the same in the x and y directions.

7. A method in accordance with any one of the preceding claims, **characterized in that** the picture sensing and/or the generation and/or the evaluation of the single images (24, 25) and/or of the total image (43) take/takes place three-dimensionally.

8. A method in accordance with any one of the preceding claims, **characterized in that** a classification of the objects (10, 12) sensed in the monitored zone (21) takes place into objects (10) belonging to the machine (9) and objects (12) not belonging to the machine (9); and **in that** the safety-relevant function is not triggered by the sensing of objects (10) belonging to the machine (9).

9. A method in accordance with any one of the preceding claims, **characterized in that** the triggering of the safety-relevant function comprises the slowing down and/or stopping of the machine (9); and/or **in that** the triggering of the safety-relevant function comprises the evasion of the machine (9) with respect to the object (12); and/or **in that** the triggering of the safety-relevant function comprises the transmission of a visual and/or acoustic warning signal.

10. An apparatus for detecting an object (12) inside a monitored zone (21), comprising at least two sensors (2, 3) for a respective monitoring of at least a part of the monitored zone (21), in particular for the carrying out of a method in accordance with any one of the preceding claims,
**characterized in that**
each sensor (2, 3) is designed
- for the generation of a single digital image (24, 25) of the total monitored zone (21) in a uniform coordinate system for all sensors (2, 3);
- and for the flagging as "safe" of those coordinate points (28, 36) of the single images (24, 25) generated by the sensor which it recognizes as free of the object (12);
**in that** each sensor (2, 3) is connected to an evaluation unit (6) for the transmission of the single images (24, 25) generated in this manner;
**in that** the evaluation unit (6) is designed for the superimposition of the transmitted single images (24, 25) in accordance with their common coordinate system to form a resulting total image (43), with it being possible for the evaluation unit (6) to flag as "safe" those coordinate points (28, 36) of the total image (43) which are flagged as "safe" in at least one of the single images (24, 25) transmitted by the sensors (2, 3), whereas all other coordinate points of the total image (43) are able to be flagged as "unsafe" by the evaluation unit (6);
and **in that** the evaluation unit (6) is designed for the determination of the object coordinates from the coordinate points flagged as "unsafe" in the total image (43).

## Revendications

1. Procédé de détection d'un objet (12) à l'intérieur d'une zone de surveillance (21), dans lequel au moins deux capteurs (2, 3) surveillent chacun au moins une partie de la zone de surveillance (21),
**caractérisé en ce que**
chaque capteur (2, 3) engendre une reproduction individuelle (24, 25) numérique de toute la région de surveillance (21), les reproductions individuelles (24, 25) de tous les capteurs (2, 3) étant engendrées dans un système de coordonnées unitaire,
**en ce que** chaque capteur (2, 3) identifie comme étant "sûrs" les points de coordonnées (28, 36) de la reproduction individuelle (24, 25) qu'il a engendrés et qu'il reconnaît comme étant dégagé de l'objet (12),
**en ce que** tous les autres points de coordonnées (32, 33, 34, 40, 41, 42) des reproductions individuelles (24, 25) sont identifiés comme étant "non sûrs",
**en ce que** les reproductions individuelles (24, 25) ainsi engendrées sont chacune transmises à une unité d'évaluation (6),
**en ce que** les reproductions individuelles (24, 25) transmises par l'unité d'évaluation (6) sont superposées selon leur système de coordonnées commun pour former une reproduction d'ensemble (43) résultante, en identifiant comme étant "sûrs" les points de coordonnées (28, 36) de la reproduction d'ensemble (43) qui sont identifiés comme étant "sûrs" par au moins une des reproductions individuelles (24, 25) transmises par les capteurs (2, 3), tandis que tous les autres points de coordonnées de la reproduction d'ensemble (43) sont identifiés comme étant "non sûrs", et
**en ce que** les points de coordonnées identifiés comme étant "non sûrs" dans la reproduction d'ensemble (43) sont utilisés pour déterminer les coordonnées d'objet.

2. Procédé selon la revendication 1,
**caractérisé en ce que**
la reproduction d'ensemble (43) résultante est superposée par une zone de danger (11) définie par l'unité d'évaluation (6) et se modifiant en particulier de manière dynamique et **en ce qu'**une fonction de sécurité est déclenchée lorsqu'on détermine à l'intérieur de la zone de danger (11) au moins un nombre prédéterminé de points de coordonnées (32, 40) identifiés comme étant "non sûrs".

3. Procédé selon la revendication 1 ou 2,
**caractérisé en ce que**
les reproductions individuelles (24, 25) des différents capteurs (2, 3) possèdent chacune la même discrétisation.

4. Procédé selon l'une des revendications précédentes,
**caractérisé en ce que**
dans une phase d'initialisation est définie la zone de surveillance (21) commune pour chaque capteur (2, 3) ainsi que la position propre est déterminée par rapport à la zone de surveillance (21).

5. Procédé selon l'une des revendications précédentes,
**caractérisé en ce que**
les valeurs "sûres" et "non sûres" associées à chaque point de coordonnées des reproductions individuelles (24, 25) sont codées de manière binaire par chaque capteur (2, 3), et les données de capteur codées de manière correspondante sont transmises à l'unité d'évaluation (6).

6. Procédé selon l'une des revendications précédentes,
**caractérisé en ce que**
les reproductions individuelles (24, 25) sont engendrées par les capteurs (2, 3) dans un système de coordonnées cartésien et transmises à l'unité d'évaluation (6), et **en ce qu'**en particulier la discrétisation est la même en direction x et en direction y.

7. Procédé selon l'une des revendications précédentes,
**caractérisé en ce que**
la détection d'images et/ou la génération et/ou l'évaluation des reproductions individuelles (24, 25) et/ou de la reproduction d'ensemble (43) a lieu en trois dimensions.

8. Procédé selon l'une des revendications précédentes,
**caractérisé en ce que**
il est effectué une classification des objets (10, 12) détectés dans la zone de surveillance (21) en objets (10) appartenant à la machine (9) et en objets (12) n'appartenant pas à la machine (9) et **en ce que** la fonction de sécurité n'est pas déclenchée par la détection d'objets (10) appartenant à la machine (9).

9. Procédé selon l'une des revendications précédentes,
**caractérisé en ce que**
le déclenchement de la fonction de sécurité comprend le ralentissement et/ou l'arrêt de la machine (9) et/ou **en ce que** le déclenchement de la fonction de sécurité comprend la déviation de la machine (9) par rapport à l'objet (12) et/ou **en ce que** le déclenchement de la fonction de sécurité comprend l'émission d'un signal d'avertissement optique et/ou acoustique.

10. Dispositif de détection d'un objet (12) à l'intérieur d'une zone de surveillance (21), comportant au moins deux capteurs (2, 3) pour la surveillance d'au moins une partie de la zone de surveillance (21), en particulier pour mettre en oeuvre un procédé selon l'une des revendications précédentes,
**caractérisé en ce que**
chaque capteur (2, 3) est réalisé
- pour engendrer une reproduction individuelle (24, 25) numérique de toute la zone de surveillance (21) dans un système de coordonnées unitaire pour tous les capteurs (2, 3),
- et pour identifier comme étant "sûrs" les points de coordonnées (28, 36) des reproductions individuelles (24, 25) engendrées par celui-ci, qu'il reconnaît comme étant dégagées de l'objet (12),
**en ce que** chaque capteur (2, 3) est relié à une unité d'évaluation (6) pour transmettre des reproductions individuelles (24, 25) ainsi engendrées,
**en ce que** l'unité d'évaluation (6) est réalisée pour superposer les reproductions individuelles (24, 25) transmises selon leur système de coordonnées commun pour former une reproduction d'ensemble (43) résultante, les points de coordonnées (28, 36) de la reproduction dans son ensemble (43), qui sont au moins identifiés comme étant "sûrs" dans une des reproductions individuelles (24, 25) transmises par les capteurs (2, 3), peuvent être identifiés par l'unité d'évaluation (6) comme étant "sûrs", tandis que tous les autres points de coordonnées de la reproduction dans son ensemble (43) peuvent être identifiés par l'unité d'évaluation (6) comme étant "non sûrs", et **en ce que** l'unité d'évaluation (6) est réalisée pour déterminer les coordonnées d'objet à partir des points de coordonnées qui sont identifiés dans la reproduction dans son ensemble (43) comme étant "non sûrs".
